# EUROPEAN PATENT APPLICATION

(11) **EP 4 708 284 A1**
(43) Date of publication of application: **11.03.2026**
(21) Application number: 25200301.7
(22) Date of filing: 04.09.2025
(51) Int. Cl.: G10L 15/16, G10L 15/22

(54) **METHOD OF CONTROLLING HOME APPLIANCE BASED ON COMMAND AND DEVICE FOR IMPLEMENTING THE SAME**

(30) Priority: 05.09.2024 KR 20240120824; 10.04.2025 WO PCT/KR2025/004910
(71) Applicant: LG Electronics Inc., Yeongdeungpo-gu Seoul 07336 (KR)
(72) Inventor: LEE, Eunah, 07796 Seoul (KR)
(74) Representative: Ter Meer Steinmeister & Partner

(57) **Abstract**

The present invention relates to a method of controlling a home appliance based on a command and a device for implementing the same, and a method of controlling a home appliance based on a command includes a first operation of determining, by a electronic device, whether an input command corresponds to direct control, a second operation of inputting, by the electronic device, the command, guide including category of the command, sample texts having similarity greater than or equal to a predetermined reference value with the input command extracted from a database to a generative artificial intelligence (AI) module when the input command does not correspond to the direct control in the first operation, and a third operation of generating, by the electronic device, a control command using the generated result by the generative AI module and the generated result includes category of the input command.

## Description

### BACKGROUND

### Technical Field

The present invention relates to a method of controlling a home appliance based on a command and a device for implementing the same.

### Description of the Related Art

Control methods for devices such as home appliances can be classified into a control method through direct human manipulation and a control method through natural language commands. In the case of the direct manipulation, a user can control the operation of the home appliance by manipulating a remote controller, buttons or dials on the home appliance, etc. In the case of the natural language command control, when the user inputs natural language commands to the home appliance, the home appliance recognizes and operates the commands.

However, the natural language commands uttered or input by the user vary from person to person, making it difficult to interpret and translate these commands into actual commands. In particular, the accuracy of natural language command interpretation is required depending on past command input habits and home appliance usage environment of each user.

Accordingly, the present specification describes a method and device for interpreting the intent of a command uttered by a user, generating a corresponding control command, and controlling a home appliance using the control command.

### SUMMARY OF THE INVENTION

The present specification is directed to solving the above problems and improving speech recognition errors and enabling flexible user command recognition.

It is an object to enable the simultaneous operation of multiple controls when user commands are processed.

It is an object to enable the user to control home appliances through voice recognition even when the user does not use predefined commands.

Objects of the present invention are not limited to the above objects, and other objects and advantages of the present invention that are not described can be understood by the following description and will be more clearly understood by embodiments of the present invention. In addition, it will be able to be easily seen that the objects and advantages of the present invention may be achieved by devices and combinations thereof that are described in the claims.

The object is solved by the features of the independent claims. Preferred embodiments are given in the dependent claims

According to a first aspect of the present invention, there is provided a method of controlling a home appliance based on a command, the method includes a first operation of determining, by an electronic device, whether an input command corresponds to direct control, a second operation of inputting, by the electronic device, a guide including a category for the command together with the command and a sample text having similarity greater than or equal to a predetermined reference value with the input command extracted from a database to a generative AI module when the command input in the first operation does not correspond to the direct control, and a third operation in which a result generated by the generative artificial intelligence (AI) module includes the category of the input command and which generates a control command using the generated result.

In the method, the electronic device may be the home appliance, and the method may further comprise a fourth operation of providing, by the home appliance, a function according to the generated control command.

The method may further comprise providing, by the home appliance, a function according to the control command corresponding to the input command when the input command corresponds to the direct control in the first operation.

In the method, the sample text may have a similarity greater than or equal to the reference value with the input command based on BM25 or cosine similarity.

The method may further comprise generating, by the electronic device, a control command using the generated result when the input command corresponds to post-interpretational control in the result generated by the generative AI module in the third operation.

The method may further comprise generating, by the electronic device, a control command corresponding to a routine included in the generated result when the input command corresponds to post-interpretational routine or control in the result generated by the generative AI module in the third operation.

The method may further comprise generating, by the electronic device, a control command to output the generated result via voice or text when the input command corresponds to post-interpretational chat in the result generated by the generative AI module in the third operation.

In the method the third operation may further include generating the control command using an intent control command and a slot control command included in the generated result, and the second operation may include inputting, by the electronic device, a sample text including one or more intent control commands and one or more slot control commands necessary for con-trolling the home appliance and the input command to the generative AI module.

According to another of the present invention, there is provided a server for controlling a home appliance based on a command, including a server control unit configured to determine an input command and generate a corresponding control command, a database in which a plurality of sample texts are stored, and a server communication unit configured to communicate with a home appliance, wherein, after the server communication unit receives a command input to the home appliance from the home appliance, the server control unit inputs a guide including a category for the command together with the command and a sample text having similarity greater than or equal to a predetermined reference value with the input command extracted from a database to a generative AI module when the command input in the first operation does not correspond to the direct control, a result generated by the generative artificial intelligence (AI) module includes a category of the input command, the server control unit generates a control command using the generated result, and the server communication unit transmits the control command to the home appliance so that the home appliance provides a function according to the generated control command.

In one or more embodiments, the input command input by a user may correspond to a previously set format.

In one or more embodiments, the input command provided by the user may be categorizable into a direct control input command category and a post-interpretational input command category.

In one or more embodiments, a guide may be a prompt into a generative artificial intelligence (AI) module, wherein the prompt includes guide including information for distinguishing which of the post-interpretational input command category the input command belongs.

When the input command corresponds to the direct control, the server control unit may not input the input command to the generative AI module.

The sample text may have similarity greater than or equal to the reference value with the input command based on BM25 or cosine similarity.

The server control unit may generate a control command using the generated result when the input command corresponds to post-interpretational control in the result generated by the generative AI module in the third operation.

When the input command corresponds to post-interpretational control or routine in the result generated by the generative AI module, the server control unit may generate a control command corresponding to a routine included in the generated result.

When the input command corresponds to post-interpretational chat in the result generated by the generative AI module in the third operation, the server control unit may generate a control command to output the generated result via voice or text.

The server control unit may generates the control command using an intent control command and a slot control command included in the generated result, and the serve control unit may input a sample text including one or more intent control commands and one or more slot control commands necessary for controlling the home appliance, the sample texts, and the input command to the generative AI module.

According to further aspects of the present technique: a home appliance is presented which performs the method of the present technique as described in the first aspect mentioned hereinabove or according to claim 1, or a server which communicates with a home appliance is presented which performs the method of the present technique as described in the first aspect mentioned hereinabove or according to claim 1, or a system comprising a home appliance and a server which communicate with each other is presented, the system performs the method of the present technique as described in the first aspect mentioned hereinabove or according to claim 1.

In one or more aspects a method of controlling a home appliance or of controlling a home appliance in communication with a server is provided, in response to an input command provided by a user, wherein the home appliance or the server is configured to recognize input commands having a set format, wherein the input command provided by the user is categorizable into a direct control input command category and a post-interpretational input command category, the direct control input command category representing input commands having the set format and directly recognizable by the home appliance or the server for generating a corresponding control command, and the post-interpretational input command category representing input commands other than the input commands of the direct control input command category and requiring interpretation for generating a corresponding control command; and wherein the post-interpretational input command category comprises one or more of a post-interpretational control category, a post-interpretational routine category and a post-interpretational chat category, and a combination thereof.

In one or more embodiments, the method may comprise determining, by the home appliance or the server, whether the input command provided by the user corresponds to the direct control input command category; when the input command provided by the user does not correspond to the direct control input command category, inputting, by the home appliance or the server, the input command provided by the user and a prompt into a generative artificial intelligence module, wherein the prompt includes guide including information for distinguishing which of the post-interpretational input command category the input command belongs, and a sample text having similarity greater than or equal to a predetermined reference value with the input command, wherein the sample text is extracted from a database by the home appliance or the server; receiving, by the home appliance or the server, a result generated by the generative artificial intelligence module, wherein the generated result specifies the post-interpretational input command category for the input command provided by the user; and generating, by the home appliance or the server, a control command using the generated result.

In one or more embodiments, in determining whether the input command provided by the user corresponds to the direct control input command category, the home appliance or the server may determine a match between the input command provided by the user and one or more predefined input commands preset in the home appliance or the server.

In one or more embodiments, in determining whether the input command provided by the user corresponds to the direct control input command category, the home appliance or the server may determine a degree of match between the input command provided by the user and one or more predefined input commands preset in the home appliance or the server, and may determine that the input command provided by the user corresponds to the direct control input command category if the degree of match is equal to or greater than a threshold value.

In one or more embodiments, when the input command provided by the user corresponds to the direct control input command category, the home appliance or the server may generate and execute the corresponding control command based on the input command provided by the user, and the home appliance performs a function or an operation corresponding to the executed control command.

In one or more embodiments, when the input command provided by the user corresponds to the direct control input command category, the input command may not be inputted to the generative AI module.

In one or more embodiments, the generated result may include information recognizable by the home appliance or the server as an input command having the set format or as a control command executable on the home appliance to perform the function or the operation, and wherein in generating the control command using the generated result, the home appliance or the server, generates the control command using the information.

In one or more embodiments, the home appliance or the server may execute the control command generated using the generated result, and the home appliance performs a corresponding function or operation on execution of the control command.

In one or more embodiments, the sample text may have similarity greater than or equal to the reference value with the input command based on BM25 or cosine similarity.

In one or more embodiments, the home appliance or the server may determine the similarity of the sample text.

In one or more embodiments, generating the control command using the generated result, may further comprise generating, by the home appliance or the server, a control command to control a function or an operation by the home appliance, when the generated result specifies the post-interpretational input command category for the input command provided by the user corresponds to post-interpretational control.

In one or more embodiments, generating the control command using the generated result, may further comprise generating, by the home appliance or the server, a control command corresponding to a routine for one or more functions or operations performed by the home appliance, when the generated result specifies the post-interpretational input command category for the input command provided by the user corresponds to post-interpretational routine.

In one or more embodiments, generating the control command using the generated result, may further comprise generating, by the home appliance or the server, a control command to output a chat or announcement or a response by the home appliance via voice or text, when the generated result specifies the post-interpretational input command category for the input command provided by the user corresponds to post-interpretational chat.

In one or more embodiments, inputting the input command provided by the user and the prompt into the generative AI module, may include inputting, by the home appliance or the server, a sample text including one or more intent control commands and one or more slot control commands necessary for controlling the home appliance to the generative AI module.

In one or more embodiments, generating the control command using the generated result, may further include generating the control command using an intent control command and a slot control command included in the generated result or using information for generating an intent control command and a slot control command included in the generated result.

In one or more embodiments, the input command may be provided to the home appliance by the user via text and/or voice.

In another aspect a server for controlling a home appliance in response to an input command provided by a user is provided, the server comprising: a server communication unit configured to communicate with the home appliance, wherein the server communication unit is configured to receive, from the home appliance, the input command inputted by the user to the home appliance, and to provide a control command to the home appliance; a database which stores a plurality of sample texts; and a server control unit configured to receive the input command from the server communication unit and to generate the control command, wherein the server control unit is configured to perform a method according to any one of the preceding aspects or optional embodiment features.

In another aspect a home appliance for performing a function or an operation in response to an input command provided by a user is provided, the home appliance comprising: a device communication unit configured to receive the input command inputted by the user to the home appliance or to a remote controller communicating with the device communication unit; a database which stores a plurality of sample texts; and a device control unit configured to receive the input command from the device communication unit and to generate the control command, wherein the device control unit is configured to perform a method according to any one of the preceding aspects or optional embodiment features.

In another aspect a system is provided comprising a home appliance and a server configured to communicate with each other.

When the present invention is applied, it is possible to improve speech recognition errors, thereby enabling flexible recognition of user commands.

When the present invention is applied, it is possible to enable simultaneous operation of various controls when user commands are processed.

When the present invention is applied, home appliances can be controlled through voice recognition even when the user does not use predefined commands.

Effects of the present invention are not limited to the above effects, and various effects of the present invention can be easily derived from the configuration of the present invention.

### BRIEF DESCRIPTION OF THE DRAWINGS

FIG. 1 is a view showing a process in which a home appliance operates upon receiving a command according to one embodiment of the invention.
FIG. 2 is a view showing a process in which, upon receiving a command, a home appliance transmits the command to a server, receives a control command from the server, and then operates accordingly according to another embodiment of the invention.
FIG. 3 is a view showing a configuration of the server of one embodiment of the invention.
FIG.4 a view showing classification of input commands of one embodiment of the invention.
FIG. 5 is a view showing a process in which the server processes the input commands of one embodiment of the invention.
FIG. 6 is a view showing a structure of a prompt according to one embodiment of the invention.
FIG. 7 is a view showing the exemplary description of a base of one embodiment of the invention.
FIG. 8 is a view showing a flow for interpreting the input commands using a generative artificial intelligence (AI) module according to one embodiment of the invention.
FIG. 9 a view showing a detailed operation process of the server of one embodiment of the invention.
FIG. 10 a view showing a configuration of the home appliance of one embodiment of the invention.

### DETAILED DESCRIPTION OF THE INVENTION

Hereinafter, embodiments of the present invention will be described in detail with reference to the accompanying drawings so that those skilled in the art to which the present invention pertains can easily carry out the present invention. The present invention may be implemented in various different forms and is not limited to the embodiments described herein.

In order to clearly describe the present invention, parts not related to the description have been omitted, and the same or similar components are denoted as the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present disclosure, when it is determined that a detailed description of a related known configuration or function may obscure the gist of the present disclosure, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

Hereinafter, a home appliance described herein is a device including an electronic product. The home appliance may be disposed in homes, offices, or the like and moved and disposed in other locations by people.

The device described herein, for example, a home appliance or a server device, preprocesses a voice command or text command input by a user, classifies the input command (input user command) into a specific category, interprets the input command according to the classified category, and controls the home appliance to operate in response to the interpreted result.

The home appliance, the server device (server), or a system composed of one or more devices may store hardware or software for processing feature commands. In addition, the home appliance, the server device (server), or the system composed of one or more devices may receive and execute software for processing feature commands from a remote third device. Processing feature commands using hardware embedded in the device, software stored within the device, or executable software transmitted may be performed by a processor within each device. Alternatively, these hardware or software may operate as processors.

To this end, the processor may store software or program code capable of performing the above tasks. After such software or program code is received from another external device and stored in a storage medium used by the processor, the processor may execute the software or program code.

In addition, the processor may include a hardware component, such as a programmable chip, and the processor may store data, program code, and the like, which will be input to the hardware component, in a predetermined storage medium and input the data, the program code, and the like to the hardware component.

The hardware or software may be the processor itself. Alternatively, the hardware or software may be linked with the processor to implement embodiments of the present invention.

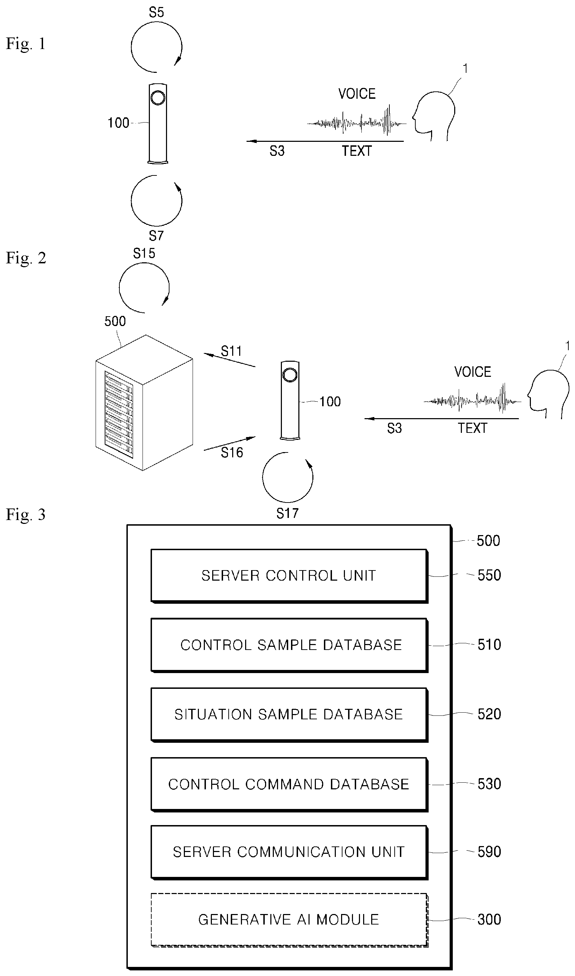

FIG. 1 is a view showing a process in which a home appliance operates upon receiving a command according to one embodiment of the present invention.

A user 1 inputs a command or a predetermined or set command , e.g. voice or text, to a home appliance 100 (S3) or to an input device/remote controller communicating (wired or wirelessly) with the home appliance 100 communicating with the home appliance. The command may be input by the user via voice or text and may be referred to as user command or input command or a user input command. The home appliance 100 (and/or the input device/remote controller) processes the input command, for example in case of the input command is provide via voice performs speech-to-text conversion on the input command, and determines or recognizes or generates a control command corresponding to the input command based on the input command or the processed/preprocessed result (S5). When the control command is determined/recognized/generated, the home appliance 100 executes the determined control command to perform a predetermined or associated or corresponding function or operation (S7).

FIG. 2 shows a home appliance which is in communication with a server (500). FIG. 2 shows a process in which, upon receiving an input command from a user, the home appliance (or an input device/remote controller communicating - wired or wirelessly - with the home appliance 100 and/or with the server 500) transmits the command to the server, the home appliance receives a control command from the server, and then operates accordingly.

The home appliance 100 transmits the input command to a server 500 (S11). In this case, when the input command is a voice command, the home appliance 100 (or the input device/remote controller) may convert the voice command into text and transmit the command as the text, which is the result of preprocessing, to the server 500.

In this case, the server 500 may determine a control command corresponding to the received command (S15). The preprocessing process may be performed by the server 500. In this case, the home appliance 100 may transmit the input command directly to the server 500.

When the control command is determined, the server 500 transmits information on the determined control command to the home appliance 100 (S16), and the home appliance 100 executes the received control command to perform a predetermined or corresponding or associated function or operation (S17).

As shown in FIGS. 1 and 2, the server 500 or the home appliance 100 may generate or determine an appropriate control command for the preprocessed command.

In the present application, the input command inputted by the user may be or may resemble or match a default command or defined or predefined command that is preset in the home appliance 100 and/or the server 500. For example, the home appliance and/or the server may include a database or may have a database which includes one or a plurality of default or defined commands (e.g. a list of input commands that are programmed or predefined by a manufacturer or the user of the home appliance to be input by the user to execute a corresponding function of the home appliance) and having one or a plurality of corresponding control commands. The control commands are associated with one or more functions or operations of the home appliance, and thus when home appliance executes a control command the home appliance performs the associated function or operation of the home appliance.

Such user input commands that can be recognized by the home appliance/server as a default/programmed/defined/predefined input command may be referred to as direct control or direct control commands or defined input commands or input commands falling or listed in direct control category of input commands or as recognizable input command category, since such user commands can be readily recognized by the home appliance, and its corresponding control command can be determined/recognized/selected/generated by the home appliance/server and can be executed on the home appliance by the home appliance/sever leading to performance of the associated or designated function or operation of the home appliance.

Alternatively, the input command inputted by the user may not be or may not resemble or match any default/programmed/defined/predefined input command, thus a corresponding control command cannot be directly determined from the input command - and such input commands may be referred to as input commands requiring interpretation (i.e. to-be-interpreted input command or non-default input command or input command deviating from the default command, or as undefined input commands). For undefined input commands i.e. for input commands which could not be determined or recognized by the home appliance/server as direct control command i.e. which do not correspond to direct control, the method performs an interpretation of the input command by using generative artificial intelligence module based on the input command and further information (i.e. a prompt) provided by the server/home appliance (e.g. one or more of all of a base or base information, a guide or guide information, a sample or sample information) to the generative AI module, and consequently the generative AI module generates a result. The input commands requiring interpretation may be categorized as non-direct control category or unrecognizable input command category or post-interpretational category, and may include one or more of a post-interpretation control category, a post-interpretation routine category and a post-interpretation chat category.

The prompt provided by the home appliance and/or the sever to the generative AI module may direct or limit or instruct the generative AI to provide/generate the result such that the generated result resembles a default/programmed/defined/predefined input command recognizable by the home appliance/server and thus the home appliance/server may determine/recognize/generate a corresponding control command to perform a function or operation, or the generated result resembles a control command that is executable on the home appliance to perform a function or operation and thus the home appliance/server may execute the control command to perform an associated/designated/corresponding function or operation of the home appliance.

Hereinafter, the description focuses on the server 500 performing tasks for command recognition, but the present invention is not limited thereto, and the home appliance 100 may also provide some or all of functions provided by the server 500. In addition, for convenience of description, an air conditioner will be described as an example of the home appliance 100, but the present invention is not limited thereto.

Hereinafter, a device/apparatus/system for implementing embodiments of the present invention will be described.

The embodiments of the present invention may be implemented in various devices. The device includes various types of a server, a home appliance, an electronic device, a computing devices, etc. In addition, the device of the present invention may include hardware or software components that perform the embodiments of the present invention in addition to physical devices. In addition, the embodiments of the present invention include programs, hardware, chips, and the like stored in a form capable of executing predetermined tasks or implemented in a form capable of executing the task.

Programs, software, and the like may be fixedly stored within the device or may be temporarily transmitted from an external source, stored in the device, and then executed. In the case of the fixed storage method, the device may include a non-transitory computer readable medium.

That is, the embodiments of the present invention may be implemented as one or more computer programs or computer-readable storage media in a combination of one or more of the above ones.

The functions of the elements disclosed herein may be implemented using circuits or processing circuits including general-purpose processors, special-purpose processors, integrated circuits, application-specific integrated circuits (ASIC), existing circuits, and/or a combination thereof. The circuits may be processors configured or programmed to perform the disclosed functions. The processor may include transistors and other circuits and thus may be considered a processing circuit or circuit.

The circuits, units, or means herein may be hardware that performs or is programmed to perform the functions described in the detailed description. The hardware may be the hardware disclosed herein or other known hardware and may be hardware that is programmed or configured to perform the functions described in the detailed description. When the hardware is a processor, which may be considered a type of circuit, the circuits, means, or units may be a combination of hardware and software and may be software used to configure the hardware and/or the processor. In addition, the computer storage medium may be a non-transitory computer readable medium. For example, the computer storage medium may be executable by a cloud server-based system. The computer storage medium may be disposed within a single device or distributed across two or more different devices. Accordingly, a single logical computer storage medium may physically include two or more computer storage media, and positions at which these media are disposed may also be one or more positions. The computer storage medium includes various storage media such as a hard disk, a CD/DVD disk, a memory card, a memory chip, etc.

In addition, the data described herein may be calculated or performed in various environments, such as a cloud server-based system, an on-device system, a distributed server system (multiple servers), etc. The data may be processed in a distributed manner in a cloud server or executed locally on an on-device processor, and the results of the processing in each environment may be stored in non-volatile memory.

Electronic devices, such as home appliances, and server computing devices may be connected to one or more storage devices via a network. The storage device may be a combination of volatile and non-volatile memories and may or may not be disposed at the same physical position as the computing device.

The server computing device may include one or more processors and a memory. In this case, the memory may store information accessible to the processor and include data that may be processed, stored, or modified by processor-executable commands. In addition, the memory may include volatile and non-volatile memories. The processor may include a central processing unit (CPU), a graphics processing unit (GPU), a field programmable gate array (FPGA), an ASIC, or a tensor processing unit (TPU).

Instructions may be configured to perform specific operations when the processor executes an instructed task and stored in object code or an interpretable script format. These commands may be used to implement the system and executed on a local or remote processor. Data may be retrieved, stored, or modified in response to the commands and configured in a database, JSON, YAML, or XML format.

These commands may include executable files, source code files, metadata, etc.

Electronic devices including home appliances and hubs may be configured similar to a server computing device. The electronic devices including home appliances and hubs may include a processor, a memory, commands, data, and user input and output devices. The server computing device may transmit data to the electronic device, and the electronic device may display a portion of the received data through a display. In addition, data transmission and communication between the server computing device and the electronic device is possible via networks such as Bluetooth, Wi-Fi, wired and wireless networks, or the like, and direct and indirect communication between computing devices is possible, thereby supporting various protocols and connection methods.

In addition, the functions of the server computing device of the present invention may be performed by a smartphone, a tablet, etc.

The methods or processes in the embodiments of the present specification sequentially perform one or more tasks, and each task may be performed by either hardware or software or collaboration between the two. For example, hardware may perform a first task, and software may perform a second task. Of course, hardware may perform the entire task, or software may perform the entire task.

FIG. 3 is a view showing a configuration of the server according to one embodiment of the present invention.

The server 500 includes a server control unit 550, a server communication unit 590, and at least one or two or all of a control sample database 510, a situational sample database 520, and a control command database 530. In addition, the server 500 includes a generative artificial intelligence (AI) module 300. That is, the generative AI module 300 may be implemented in the server 500 or an external device. The generative AI module 300 may be single software or hardware, or a computer-executable storage medium. In one embodiment of the electronic device, the server 500 or the home appliance 100 may process various information, perform communication, and process data stored in a storage medium such as a memory or the like. The server 500 or the home appliance 100 may include the generative AI module in the form of software, hardware, or a storage medium. Alternatively, the generative AI module may be implemented in the form of software, hardware, or a storage medium in an external device other than the server 500 or the home appliance 100. Accordingly, the generative AI module 300 described herein may be implemented as a generative AI unit, a generative AI controller, a generative AI program, generative AI software, generative AI hardware, etc.

The server control unit 550 determines, for the input command, which category it belongs to or which control command it corresponds to and generates/selects/recognizes/determines a corresponding control command. During the determination process, the server control unit 550 may input predetermined information into the generative AI module 300. That is, in order to identify a category, the server control unit 550 may input the input command to the generative AI module 300 and acquire a category as a result. This may also be applied to or performed by the device control unit 150.

The databases 510 and 520 may store multiple sample texts. In addition, among the databases, a situational sample database 520 may store predefined routines.

The server communication unit 590 communicates with the home appliance 100. In addition, when the generative AI module 300 is disposed in an external device (external server), the server communication unit 590 also communicates with the external device.

When the server communication unit 590 receives a command input (i.e. user command or input command) into the home appliance 100 from the home appliance 100, the server control unit 550 determines whether the command input to the home appliance 100 corresponds to direct control.

When the determination result indicates that the input command does not correspond to the direct control, the server control unit 550 extracts one or more sample texts having similarity greater than or equal to a predetermined reference value with the input command from the database 520 and inputs the one or more sample texts to the generative AI module 300.

For example, the server control unit 550 may input a guide (i.e. guide information) including a category for the command together with the command and sample texts (sample texts having similarity greater than or equal to a predetermined reference value with the input command) extracted from a database to the generative AI module. In addition, a result generated by the generative AI module may include the category of the input command, and the server control unit 550 may generate a control command using the generated result. Such a process may also be performed in/by the device control unit 150.

The similarity may be determined based on whether the input commands are the same type. For example, in the case of an air conditioner, temperature control, wind direction control, time setting, and the like are each the types of commands. For a command related to the temperature control, the server control unit 550 may extract an existing sample text related to temperature from the database 520. Of course, such similarity determination may also be performed in the device control unit 150.

When the input command corresponds to the direct control, the server control unit 550 may generate a control command corresponding to the input command without inputting the input command to the generative AI module 300. The result generated by the generative AI module 300 may comprises category of the input command (i.e., the input user command).

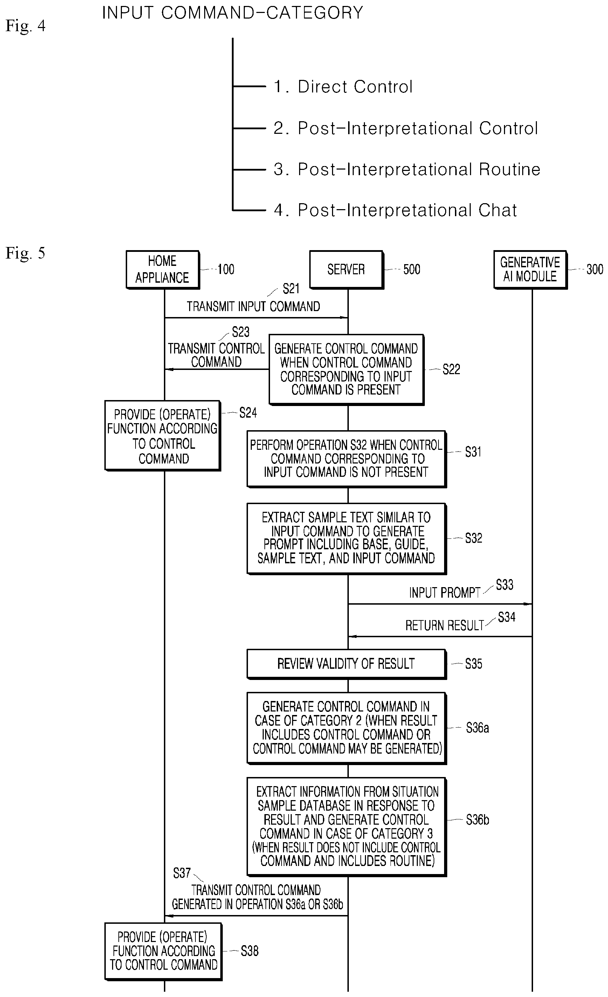

And, when the input command corresponds to post-interpretational control in the result generated by the generative AI module 300, the server control unit 550 generates a control command using the generated result. This refers to the category description of FIG. 4.

In addition, the server communication unit 590 transmits the control command to the home appliance 100 so that the home appliance 100 may provide functions in response to the generated control command, thereby enabling the server 500 to control the home appliance 100 in response to the command.

FIG. 4 is a view showing classification of input commands according to one embodiment of the present invention.

Hereinafter, an input voice commands, an input text command, or an utterance resulting from preprocessing thereof are collectively referred to as an input command.

The input commands generally belong to direct control (Category 1) or non-direct control (Categories 2, 3, and 4). That is, the input commands may be categorized into those requiring interpretation via the generative AI module (Categories 2, 3, and 4) and those not requiring interpretation (Category 1).

The direct control refers to a case in which an input command directly matches a control command required to control a home appliance. This corresponds to a case in which the server 500 does not apply a separate interpretation process to the input command. The input command corresponding to the direct control may correspond to one or more control commands.

When the input command belongs to the direct control category, the server 500 generates a control command necessary to control the home appliance 100 in response to the input command. For example, when the input command corresponds to a single control command (composed of a single utterance sentence), such as "Turn on the air conditioner" or "Temperature 25 degrees," or when the input command corresponds to two control commands (composed of a composite utterance sentence), such as "Level 4 airflow in a cooling mode," the server 500 may control the home appliance 100 using the corresponding control command. That is, the server 500 may generate a control command based on the input command (input command) corresponding to the direct control and provide the control command to the home appliance 100.

The server 500 determines only whether the input command corresponds to the direct control, and when the input command does not correspond to the direct control, the server 500 inputs the control command to the generative AI module 300. In this case, the server 500 may includes a base, a guide, and a sample text in the information (prompt) which will be input to the generative AI module 300.

The base includes information indicating the role the generative AI module 300 should perform or the result the generative AI module 300 should generate in order to interpret the input command.

The guide includes information for distinguishing which category the input command belongs to (i.e., which of categories 2, 3, or 4 in FIG. 4 it belongs to) and/or components of the control command the generative AI module 300 should generate corresponding to the information.

The sample text is a sample sentence whose similarity to the input command is a predetermined reference value or more. The server 500 may extract N sample texts (N is a natural number greater than or equal to 1) from the database 510 or 520 that have similarity greater than or equal to the predetermined reference value with the input command using a BM25 (Best Match 25) or cosine similarity technique. That is, the sample texts may be sample sentences that have similarity greater than or equal to the predetermined reference value with the input command based on the BM25 or cosine similarity among the sample texts stored in the databases 510 and 520. In addition to the above method, there are various ways to extract example sentences.

A process of generating similarity according to one embodiment of the present invention is as follows. In order to generate similarity, user input commands may be preprocessed. For example, the server control unit 550 or the device control unit 150 may truncate the user input commands based on words or spaces, or extract nouns, foreign words, verbs, and root words through morphological analysis.

The server control unit 550 or the device control unit 150 may compare the user command or the preprocessed user command with the sample texts stored in the database 510 and/or 520 to perform a primary filtering operation (e.g., 30, 40, etc.). During this process, the server control unit 550 or the device control unit 150 may re-sort the filtered results according to BM25 based on frequency or the like by applying cosine similarity.

Then, the server control unit 550 or the device control unit 150 may select i samples of the intent with the highest similarity score and j samples of the next-highest intent as samples.

The generative AI module 300 may generate a predetermined result in response to a prompt input to the generative AI module 300, and the server 500 determines that the input command corresponds to one of Categories 2/3/4 through the generated result.

When the input command belongs to post-interpretational control (Category 2), the server 500 may use the generated result to generate a control command necessary to control the home appliance.

Meanwhile, when the input command is a post-interpretational routine (Category 3), the server 500 may generate a control command corresponding to the corresponding routine. In this case, the routine may be stored in the situational sample database 520 and may include common routines applicable in common to all home appliances and personalized routines applicable to home appliances used by specific users.

When the input command is a post-interpretational chat (Category 4), the server 500 outputs the generated result as voice or text. In order to enable the home appliance to output the generated result, the server 500 may generate a control command to allow a speaker or screen of the home appliance to output voice or text.

Categories 1, 2, and 3 all control the home appliance to perform specific operations. Accordingly, the input commands corresponding to Categories 1, 2, and 3 are control utterance commands. However, there are cases in which the user explicitly or implicitly provides instructions to operate the home appliance, and when the server 500 cannot generate a control command matching the input command, the input command, base, guide, and sample texts may be input to the generative AI module 300 to determine the user intent.

That is, even when the user explicitly instructs a functional operation, when the input command includes words or sentences unrelated to control or includes sentences with errors, the server 500 cannot generate a corresponding control command.

In this case, the server 500 can increase the accuracy of command processing using the generative AI module 300.

When the user implicitly inputs a voice/text command to operate the home appliance, the server 500 may process the voice/text command as a situation-related command. The situation-related commands may be classified into those defined/stored in the server 500 and those undefined.

That is, the server 500 may store routines, which are a set of functions provided by the home appliance 100, and even when the user instructs the execution of such routines, when the user cannot clearly utter the name of the routine, the accuracy of command processing can be increased using the generative AI module 300.

In addition, the server 500 may interpret the user intent even when the user intent is not specified in the routine.

In the present specification, when the home appliance or the server preprocesses the command input through the home appliance and the preprocessed command provides information necessary for controlling the home appliance, the appliance performs a process corresponding to the input command (Category 1). On the other hand, when the preprocessed command cannot provide the information necessary for controlling the home appliance, the home appliance performs a process in which the interpretation process for the input command is performed and the home appliance operates using the generated information after interpretation (Categories 2, 3, 4).

In order to enable the generative AI module 300 to generate the accurate result, the server 500 may extract sample texts with similarity greater than or equal to the predetermined reference value with the input command from the control sample database 510 or the situational sample database 520 and input the sample texts together with the input command to the generative AI module 300.

Consequently, the generative AI module 300 interprets the input command using the samples and generates the result includes information needed to generate control commands that allow home appliances to operate based on the input commands (i.e., the input user command accordingly. The server 500 generates a control command corresponding to the generated result and provides the control command to the home appliance 100.

The server 500 of the present invention may analyse and extract the user intent when receiving the voice/text command for the home appliance 100, such as an air conditioner or the like, and control the home appliance 100 in response to the user intent.

When a sentence spoken by the user (input command) corresponds to the previously set format, the server 500 may control the home appliance 100 in response to the input command without using a separate generative AI module 300.

Meanwhile, when the input command differs from the format set in the server 500, the generative AI module 300 is used to interpret the input command and secure the corresponding result, and errors of the generative AI module 300 can be prevented by providing intent/control for the corresponding result as predefined information (base, guide, or the like).

In addition, the home appliance may be controlled in a customized manner using the personalized information of the user with respect to commands that are routine and commands that are not routine.

During voice command processing, the server 500 may select similar commands as sample texts and provides the sample texts to the generative AI module 300, such as ChatGPT, thereby increasing the accuracy of the result, and the routine and non-routine types are applied to the output of the generative AI module 300, thereby sufficiently reflecting the user intent.

FIG. 5 is a view showing a process in which the server processes the input commands according to one embodiment of the present invention.

The home appliance 100 or a user terminal or remote controller linked to the home appliance 100 receives commands via voice or text. The home appliance 100 or user terminal transmits the input command (input command) to the server 500 (S21).

The server 500 determines whether the control command corresponding to the input command is present, and when the corresponding control command is present, the server 500 generates a control command (S22) and transmits the control command to the home appliance 100 (S23). Consequently, the home appliance 100 operates in response to the control command (S24).

On the other hand, when the control command corresponding to the input command is not present (S31), the server 500 extracts sample texts similar to the input command from the database and generates a prompt including the base, guide, sample texts, and the input command (S32). For example, sample texts are stored in the control sample database 510 or the situational sample database 520, and the server 500 may extract sample texts from the database 510 or 520 whose similarity to the input command is the predetermined reference value or more.

The server 500 may generate a prompt including the base, guide, sample texts, and input commands described above. A configuration of the prompt will be described below. Also, the generative AI module 300 may generate the prompt.

In addition, the server 500 inputs the prompt to the generative AI module 300 (S33). When the generative AI module 300 is implemented in an external server, which is a generative AI service provider, the server 500 may input the prompt to the generative AI module 300 via an API predetermined with the generative AI service provider. An example in which the generative AI module 300 is implemented in the generative AI service provider may include generative AI models such as ChatGPT and various large-scale language models. Alternatively, the generative AI module such as ChatGPT may be disposed within the server 500.

In response to the prompt input in an operation S33, the generative AI module 300 generates and provides a result. That is, the generative AI module 300 returns the result in response to the prompt input in an operation S33 (S34).

The generative AI module 300 may be implemented in the server 500 or a separate external server (generative AI service provider). The server 500 may include guidance in the prompt in order to interpret which category the input command belongs to.

The server 500 reviews the validity of the result (S35). When the review result indicates that the result includes a control command or the control command may be generated, that is, when the result is Category 2, the server 500 generates a control command (S36a).

Meanwhile, when the review result indicates that the result does not include the control command but does include a routine, that is, when the result is Category 3, the server 500 extracts information from the situational sample database 520 in response to the result to generate the control command (S36b).

The server 500 transmits the control command generated in an operation S36a or S36b to the home appliance 100 (S37). Consequently, the home appliance 100 operates in response to the control command (S38).

The functions of the server 500 of FIG. 5 may be provided by the home appliance 100.

The process of FIG. 5 is briefly summarized as follows. The server 500 or the home appliance 100 determines whether the input command corresponds to direct control (S22, S31).

When the command input in an operation S22 or S31 does not belong to the direct control (Category 1), the server 500 or the home appliance 100 extracts sample texts with similarity greater than or equal to the predetermined reference value with the input command from the database 510 or 520 and inputs the sample texts to the generative AI module 300 (S32, S33).

When the input command belongs to the post-interpretational control (Category 2) in the result (S34) generated by the generative AI module 300, the server 500 or the home appliance 100 generates a control command using the generated result (S35a). In addition, the home appliance 100 provides (operates) a function according to the generated control command (S37, S38).

When the input command corresponds to the direct control (Category 1) as in the operation S22, the server 500 or the home appliance 100 generates a control command corresponding to the input command, and the home appliance 100 provides a function according to the control command corresponding to the input command (S23).

When the input command does not correspond to Category 1 in the operation S32, the server 500 or the home appliance 100 may input sample texts and the input command to the generative AI module 300. In this case, the server 500 or the home appliance 100 may extract sample texts having similarity greater than or equal to the reference value with the input command from the databases 510 or 520 and input the sample texts to the generative AI module 300. The sample texts refer to Tables 3 to 7, which will be described below.

In addition, when the input command belongs to Category 3, that is, corresponds to the execution of the routine stored in the server 500 or the home appliance 100 as shown in Table 6 below, the server 500 or the home appliance 100 acquires a control command corresponding to the stored routine and controls the home appliance 100 accordingly.

That is, when the input command corresponds to the post-interpretational routine (Category 3) in the result generated by the generative AI module 300, the server 500 or the home appliance 100 may generate a control command corresponding to the routine included in the generated result. To this end, the server 500 or the home appliance 100 may extract a control command corresponding to a pre-stored routine from a memory, a database, etc.

The server 500 or the home appliance 100 of the present invention implements a GPT prompt to improve voice recognition to enable the server 500 or the home appliance 100 to interpret the utterance text even when the user inputs a command including a control function or sentences (= non-control utterance) related to a specific situation. In addition, by using representative utterance learning data and a sample extraction algorithm, which are an example of sample texts, the server 500 or the home appliance 100 may interpret the intent of the input command (or sentence) of the user and recommend appropriate functions.

In particular, by interpreting the command input by the user using the generative AI module 300, the user intent to control the home appliance may be extracted even from complex utterances without a predefined format. In addition, the user may provide voice commands relevant to his or her situation to enable the home appliance to perform customized operations according to the user's situation. In addition, when a specific routine operation is set for the home appliance, the server 500 or the home appliance 100 may load a control command related to the routine corresponding to a sentence including the user's situation and use the control command to control the operation of the home appliance 100.

According to an embodiment of the present invention, when a user-uttered or text-input sentence directly corresponds to a control command for controlling a home appliance, the home appliance is controlled based on the corresponding control command, and otherwise, the home appliance is controlled based on the result interpreted by the generative AI module 300. Consequently, first, since the server or the home appliance can quickly determine whether the user's command corresponds to the direct control (Category 1) of FIG. 4, the voice/text control of the home appliance can be quickly performed.

In addition, when the user's command does not correspond to the direct control (Category 1), the server or the home appliance collaborates with the generative AI module 300 to acquire the control command corresponding to the input command, enabling accurate voice/text control of the home appliance.

Using the generative AI module 300, the server 500 or the home appliance 100 may process both utterances including control functions and non-control utterances.

For the utterances including control functions, complex utterance sentences indicating various control commands, sentences including non-control words, short utterances including errors or mispronunciations during recognition, and the like may be processed (see Tables 3 to 5).

In addition, for situation recognition utterances, the generative AI module 300 may provide a description or an interpretation result of the situation in a predefined situation (a set routine), a ThinQ routine, or an undefined situation. In addition, utterances related to everyday chat may also be processed by the server 500 or the home appliance (see Table 6 or 7).

That is, by dividing control commands to control the home appliance into intent control commands and slot control commands, the server 500 or the home appliance 100 may flexibly process user-input sentence-type commands to extract a device control intent of the user even from complex utterance commands and control the functions of the home appliance 100. The intent control commands and the slot control commands will be described below.

In addition, by inputting sample texts and guides for undefined routines or situations to the generative AI module 300, the server 500 or the home appliance 100 may combine two to three control commands for functions that the home appliance (e.g., an air conditioner) may provide.

By interpreting the user's utterance, a predefined routine (e.g., a routine stored in a ThinQ server or app) may be executed.

The control command to control the home appliance 100 controls the operation of the home appliance, that is, the home appliance to provide a specific function. The control commands of the home appliance are divided into the intent control commands and the slot control commands.

The intent control command indicates a high-level concept of the function of the home appliance 100, and the slot control command indicates a more detailed function of the intent control command. For the home appliance to operate, both the intent control commands and the slot control commands need to be provided. That is, the set of the intent control commands and the slot control commands dictates the functions to be performed by the home appliance.

That is, the intent control command is a high-level concept of control command, such as on/off, temperature control, and airflow control, among the functions of the home appliance functions. The slot control command corresponds to detailed settings of these intent control commands, and a specific control command for on/off includes on (turn-on) and off (turn-off), and the slot control command constituting the intent control command for temperature control may be specific temperature values. The home appliance performs its functions through a set of the intent control commands and the slot control commands.

For an air conditioner, some of the intent control commands and slot control commands are listed in Table 1. The appliance may be turned on in response to the intent control command AIR_POWER_REQUEST and the slot control command ON.

**[Table 1]**

| Intent control commands | Slot control commands |
|---|---|
| Power on-off (AIR_POWER_REQUEST) | On or off |
| Temperature control (AIR_TEMPERATURE_REQUEST) | 15 to 30 |
| Time control (AIR_TIME_REQUEST) | 10 minutes to 3 hours |
| Airflow level/air speed control (AIR_WIND_STRENGTH_REQUEST) | 1 to 5 |
| Wind Direction Control(AIR_WIND_DIRECTION_REQUEST) | left/right/up/down |
| Function (AIR_OPERATION_REQUEST) | Cooling/Blow/Dehumidification/Sleep |
| Wind characteristics setting (AIR_WIND_SETTING_REQUEST) | Indirect wind |

For an oven, some of the intent control commands and the slot control commands are listed in Table 2.

**[Table 2]**

| Intent control commands | Slot control commands |
|---|---|
| On_off (OVN_POWER_REQUEST) | On or off |
| Temperature control (OVN_TEMPERATURE_REQUEST) | 180 to 250 |
| Time control (OVN_TIME_REQUEST) | 10 minutes to 1 hours |
| Function (OVN_OPERATION_REQUEST) | Heating/Cooking/Defrosting |

That is, the intent control commands correspond to the user intent to control the device, and the slot control commands are details of such an intention. Accordingly, when the intent control commands and the slot control commands are combined, the home appliance may operate with a specific function. Depending on the home appliance, when the contents of Table 1 or 2 are input to the generative AI module 300, the generative AI module 300 may generate the intent control commands and the slot control commands corresponding to the input commands.

In addition, the generative AI module 300 may interpret which intent the voice/text command input by the user has.

In addition, sample texts may be input to the generative AI module 300 so that the generative AI module 300 may generate the intent control commands and slot control commands corresponding to the input commands.

In order to obtain accurate results through the generative AI module 300, it is necessary to generate a prompt.

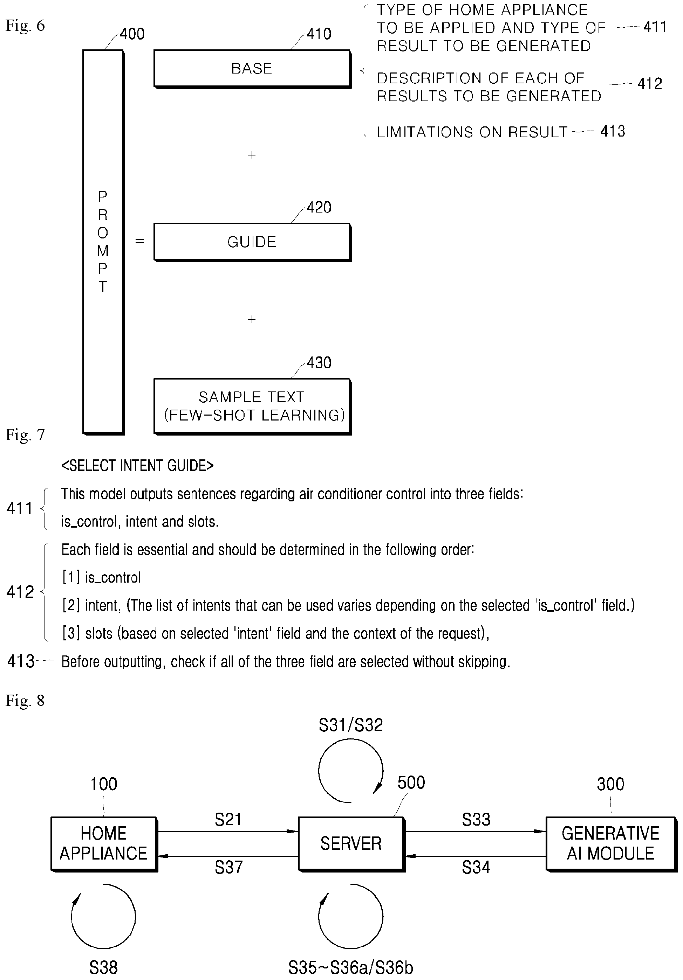

FIG. 6 is a view showing a structure of a prompt according to one embodiment of the present invention. The name of the information to be input to the generative AI module 300 is referred to as a prompt, but the present invention is not limited thereto. The server 500 or the home appliance 100 may extract intent control commands (Intent) and slot control commands (Slot) from the input commands by inputting text classification and few-shot learning based on prompting using a generative pre-trained transformer large language model (GPT LLM) in order to acquire necessary information from the generative AI module 300.

A prompt 400 may be composed of a base, guide, sample texts, and input commands required for controlling the home appliance as described above, and only some of these may be included according to embodiments.

The base 410 includes information indicating the role the generative AI module 300 should perform or the result the generative AI module 300 should generate in order to interpret the input command. For example, the server 500 or the home appliance 100 may generate the base as follows. The base includes basic rules, specifically the types of home appliances to be applied, the types of results to be generated 411, descriptions of each result 412, and limitations on the results 413.

The generative AI module 300 is instructed to generate results in the order of [1], [2], and [3] by specifying three fields for the results to be generated. See FIG. 7.

The guide includes information for distinguishing which category the input command belongs to (i.e., which of categories 2, 3, or 4 in FIG. 4 it belongs to) and components of the control command the generative AI module 300 should generate corresponding to the information. In one embodiment, the guide includes a text classification method and the definitions of intents/slots. The guide may include descriptions or definitions of the intent control commands and the slot control commands. The guide 420 may be written in various ways according to the characteristics or implementation method of the generative AI module 300.

FIG. 7 is a view showing the exemplary description of a base according to one embodiment of the present invention. Each corresponding element is indicated by a reference numeral. 411 indicates the type of result to be generated and that the applicable device is an air conditioner. 412 defines three control-related results (whether a control command is present, an intent, and a slot). 413 indicates that three items need to be included in the output.

For example, the guide may describe the rules for each result, list the intent control commands and slot control commands that need to be filled in, and specify which rules need to be followed when filling in the content.

The guide may be composed of three areas. The three areas are, for example, a guide for outputs, a guide for outputs of the intent control commands, and a guide for outputs of the slot control commands.

The guide for outputs instructs whether an input command is for control. For air conditioner-related home appliances, weather, situations, and emotions belong to "non-control," and power, temperature settings, wind speed, and the like, which are related to air conditioner control, belong to "control."

The intent control commands and their descriptions shown in Table 1 are composed of a single set. The intent control commands, as a high-level concept of slots, may instruct the selection of one specific category for the input command.

An area that guides information on the slot control commands may instruct that different intent control commands be processed separately. When the output is "control," slot control commands related to air conditioner control may be listed. These may be individually guided in response to the intent control commands.

Intent control commands - slot control command 1, slot control command 2, etc.

The guide and sample text (Few-Shot Learning) may be input to LLM. The sample text 430 is a sample sentence with similarity greater than or equal to the predetermined reference value with the input command, and the server 500 may extract N sample sentences (N is a natural number greater than or equal to 1) with similarity greater than or equal to the predetermined reference value with the input command from the database 510 or 520 using the BM25 or cosine similarity technique.

The sample texts that serve as learning data are various utterances (representative utterances), which may be stored in the control sample database 510 or the situational sample database 520.

The sample texts stored in the control sample database 510 and the corresponding intent control commands and slot control commands are shown in the following tables. Table 3 shows complex utterance sample texts with two or more controlling functions (intent control commands). Table 4 shows sample texts including words or sentences unrelated to control. Table 5 shows sample texts including some errors.

**[Table 3]**

| Sample texts (Uttered sentences) | INTENT | SLOT |
|---|---|---|
| Lower temperature to 26 degrees and increase a wind speed by 2 levels | AIR_TEMPERATURE_REQUEST | [{'temperature': '26'}] |
| | AIR_WIND_STRENGTH_REQUEST | [{'wind_speed': 'up'}, {'option': '2'}] |
| Operation in cooling mode at airflow level 4 | AIR_OPERATION_REQUEST | [{'mode_name': 'cool'}, {'onoff': 'on'}] |
| | AIR_WIND_STRENGTH_REQUEST | [{'wind_speed': '4'}] |

**[Table 4]**

| Sample texts (Uttered sentences) | INTENT | SLOT |
|---|---|---|
| Turn on the air conditioner, it feels suffocating, and cool the room. | AIR_POWER_REQUEST | [{'onoff': 'on'}] |
| | AIR OPERATION _REQUEST | [{'mode_name': 'cool'}, {'onoff': 'on'}] |
| Set the temperature to 26 degrees | AIR_TEMPERATURE REQUEST | [{'temperature': '26'}] |

**[Table 5]**

| Uttered sentences | INTENT | SLOT |
|---|---|---|
| Se-------t to 24 degrees | AIR_TEMPERATURE REQUEST | [{'temperature': '24'}] |
| Set the wind speed to Level 1 | AIR_WIND_STRENGTH_REQUES T | [{'wind_speed': '1'}] |
| Set the target temperature to 22 degrees | AIR_TEMPERATURE REQUEST | [{'temperature': '22'}] |
| Turn on the air cleaning mode | AIR OPERATION _REQUEST | [{ 'mode_name': 'airclean'} {'onoff': 'on'}] |

When the sample texts shown in Tables 3 to 5 are input, and the base and the guide are input, the generative AI module 100 generates the result including the intent control command and the slot control command.

For example, when the user inputs a command "Set the temperature to 23 degrees and increase airflow," the generative AI module 100 may generate the following result based on the sample texts shown in Table 3.
[{"intent":"AIR_TEMPERATURE_REQUEST","slots":[{"temperature":"23"}]}]
[{"intent":"AIR_WIND_STRENGTH_REQUEST","slots":[{'wind_speed': 'up'}]}]

Meanwhile, sample texts that instruct routines related to specific situations are also classified into two types, for example, predefined routines and non-predefined routines.

The predefined routines are predefined situations corresponding to home appliances, such as exercising, studying, getting a job, going out, or the like, and users may instruct these routines. Table 6 shows sample texts related to routines.

**[Table 6]**

| **Situations** | **Sample texts** | Customized operation (example) | |
|---|---|---|---|
| Exercise | "I'm going to exercise at home." | Direct airflow On Desired temperature: 22 degrees | [{"intent": "AIR_EXERCISE_REQUEST", "slots":[{"wind_setting": "direct" } {"temperature": "22"}]}] |
| | "I'll do home-workout" | | |
| | "My body is sore, so I'm going to exercise." | | |
| Study | "Help me focus on my studies." | Low-noise mode Indirect airflow On | [{"intent": "AIR_STUDY_REQUEST," "slots":[{"wind_setting": "indirect" }, {"additional_one": "low_noise"}]}] |
| | "I'm going to study hard from now on." | | |
| | "I'm going to study, so help me focus." | | |
| Sleep | "I'm slowly getting sleepy. I'm going to sleep now." | Mood light Off Sleep timer | [{"intent": "AIR_SLEEP_REQUEST", "slots":[{"additional_two": "light_off"}, {"sleep_reservation": "6"}]}] |
| | I'm tired and going to sleep, make it comfortable for sleeping." | | |
| | "I'm sleepy." | | |
| Server selection Routine | "Activate the "Leaving Home" routine." | Server acquires specific routine operation. | |

Next, for the unspecified routine, the generative AI module 300 may output corresponding information.

**[Table 7]**

| Sample texts | Customized operation (example) | |
|---|---|---|
| "Keep the temperature and humidity at a comfortable level for the cat." | Cooling Desired temperature: 24 degrees Wind speed: low | [{"intent":"AIR_GPT_RECOMMEND," "slots":{"mode_name":"cool"}, {"temperature":"24"}, {"wind_speed":"low"}] |
| "I feel suffocated at home since it's so crowded." | Cooling Direct airflow On Wind speed: high | [{"intent":"AIR_GPT_RECOMMEND," "slots":[{'mode_name': 'cool'}, {'wind_setting': 'direct {'wind_speed': 'high'}]}]'}, |

Next, when the input command is completely unrelated to controlling the home appliance, the input command corresponds to "post-interpretational chat" (Category 4), and thus the generative AI module 300 may output a corresponding result. When the user inputs the command "Who is the author who won this year's Nobel Prize in Physics?," the generative AI module 300 may output the following result.
[{'intent': 'CHAT_REQUEST,' 'slots:' [{'answer': 'The person who won the Nobel Prize in Physics this time is A'}]}]

That is, when the result generated by the generative AI module 300 in response to the input command corresponds to the post-interpretational chat, the server 500 or the home appliance 100 generates a control command that outputs the generated result via voice or text. Then, the home appliance 100 may output a portion of the generated result via voice or text.

In this case, the user may communicate with the home appliance 100 by asking questions and receive answers.

As shown in Tables 3 to 7, the sample texts stored in the databases 510 and 520 may include sentences for controlling the home appliance and a set of corresponding intent control commands and slot control commands.

Among these, Tables 3 to 5 may be stored in the control sample database 510, and Tables 6 and 7 may be stored in the situational sample database 520.

Alternatively, the sample texts in Tables 3 to 7 and the corresponding sets of the intent control commands and the slot control commands may be stored in a single database without distinction.

Using various sample texts and routines stored in the server, the server 500 may generate control commands appropriate to the user intent. The user may instruct the home appliance to perform a specific function using a voice or text command, but these commands may not directly match the control commands that control the home appliance 100.

Direct matching corresponds to the direct control of FIG. 4. For example, in order to start the operation of an air conditioner on, the user may input a command including expressions such as "turn on/turn on/switch on/please, switch on/start/please start." However, the user may input commands, which includes other expressions and start the operation of the air conditioner, to the home appliance.

For example, when the user inputs "Air conditioner, it's hot," the input command does not include various verbs described above, such as "turn on/please, turn on/switch on/please, switch on/start/please, start," and thus does not instruct a specific function of the air conditioner. However, since the user intent is to turn on the air conditioner or increase the airflow, the user intent instructs the operation of the air conditioner.

The server 500 inputs sample texts to the generative AI module 300 so that the generative AI module 300 may interpret commands even when the commands do not correspond to the direct control. That is, the generative AI module 300, which receives the sample texts corresponding to the intent control commands and the slot control commands that indicate the functions provided by the home appliance, may also generate intent control commands and slot control commands for the input commands.

In addition, a home appliance may operate according to various routines, and an air conditioner may include, for example, a study routine, an exercise routine, and the like, and a wind speed, an airflow, a target temperature, and the like may be set according to the corresponding routines. Similarly, an oven may have routines for reheating instant rice and boiling ramen, and heating temperatures, times, and the like may be set according to the corresponding routines.

Even when the command input by the user does not exactly correspond to a routine, when the server 500 inputs a situational sample texts to the generative AI module 300, the generative AI module 300 may generate a result by reflecting the situational sample texts, and when the generated result corresponds to a specific routine, the server 500 may generate a control command based on the corresponding routine.

That is, the server 500 extracts sample utterances with similarity greater than or equal to the predetermined reference value with the input command from the situational utterance database 510 and inputs the sample utterances to the generative AI module 300 together with the input command. Consequently, the generative AI module 300 interprets the input command using the sample utterance and generates a result accordingly. The server 500 generates a control command corresponding to the routine instructed by the generated result and provides the control command to the home appliance 100.

When the input command does not correspond to a predefined routine, the server 500 guides the generative AI module 300 to generate a result related to the undefined routine, thereby enabling the generative AI module 300 to generate the result accordingly.

The server 500 according to the embodiment of the present invention may provide an AI service and include the databases 510 and 520 that stores past personalized or routinized information on the customer.

Based on learning about the user's lifestyle, an optimized space solution may be provided to each individual. For example, when the user uses a voice or text command, such as "I studied well last week. Set it up the same way," the settings stored in the databases 510 and 520 at that time may be loaded to establish a personalized environment.

In one embodiment of the present invention, the server 500 includes a server cluster, which is a set of various servers. Accordingly, the configuration of the server 500 can be easily changed by those skilled in the art.

FIG. 8 is a view showing a flow for interpreting the input commands using a generative AI module according to one embodiment of the present invention. FIG. 8 shows a detailed embodiment of the embodiment of FIG. 5.

When a command is input to the home appliance 100, the server 500 receives the command (S21). In addition, the server 500 determines whether a control command corresponds to the command (S31, S32), and then otherwise, generates a prompt and inputs the prompt to the generative AI module 300 (S33). After the server 500, which receives the result generated by the generative AI module 300 (S34), reviews the validity of the result, performs an operation S36a or S36b depending on the type of the result, and transmits the control command to the home appliance 100, the home appliance 100 provides (operates) a function according to the control command (S38).

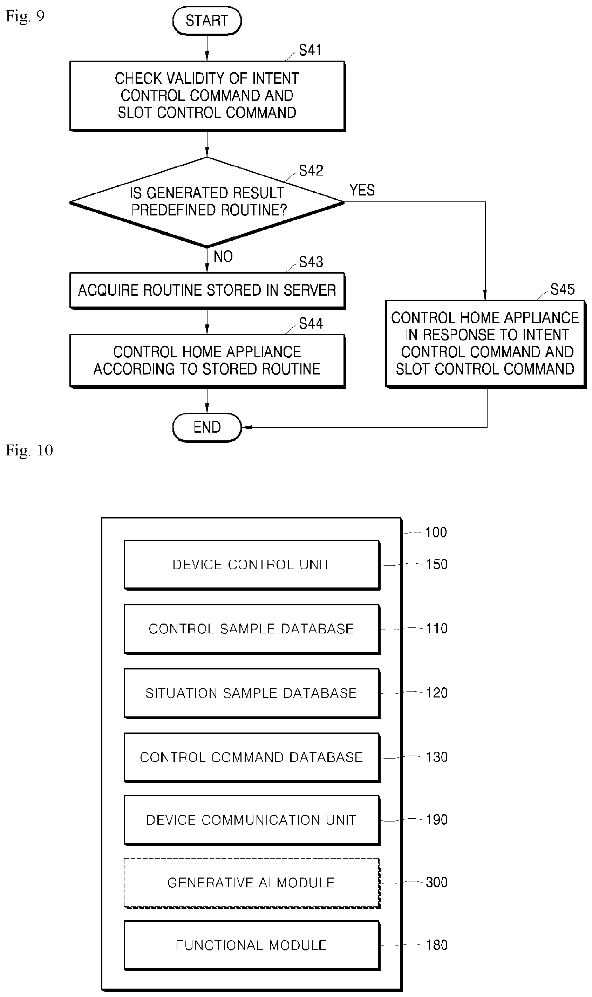

FIG. 9 is a view showing a detailed operation process of the server according to one embodiment of the present invention. An operation S35 will be described in detail.

The server control unit 550 of the server 500 checks whether the intent control command and slot control command included in the result generated by the generative AI module 300 are valid (S41). This may be checked using the intent control command and a corresponding slot control command as shown in Table 1 or 2. For example, the server control unit 550 determines that the result is valid when the intent control command generated in relation to the air conditioner is AIR_POWER_REQUEST and the slot control command is "ON."

On the other hand, when the intent control command generated in relation to the air conditioner is AIR_POWER_REQUEST and the slot control command is "5 minutes," the generated result is incorrect, and thus the server control unit 550 may instruct the home appliance 100 to re-input the command.

Alternatively, the server control unit 550 may determine whether the generated result indicates a routine, and when the generated result indicates the routine, the server control unit 550 may determine whether the routine corresponds to a stored routine to perform a validity check.

After completing the validity check in an operation S41, the server control unit 550 determines whether the generated result corresponds to a predefined routine (S42). When the generated result corresponds to the predefined routine, the server control unit 550 acquires the routine stored in the database (S43) and controls the home appliance 100 according to the stored routine.

Meanwhile, when the generated result is not the predefined routine, the server control unit 550 generates a control command based on the intent control command and the slot control command and transmits the control command to the home appliance 100 to control the home appliance 100 (S45).

The user input command (voice, text) is subjected to a predetermined preprocessing process in the server 500 or the home appliance 100. When the input command corresponds directly to a word or sentence defined and stored in advance to control the home appliance, the server 500 or the home appliance 100 converts the input command into a control command.

Meanwhile, when interpretation of the input command is required, the server 500 or the home appliance 100 performs a command interpretation process. During this process, a generative AI may be used, and the server 500 or the home appliance 100 may include a generative AI module. Alternatively, the server 500 or the home appliance 100 may interpret the input command using the generative AI module disposed in an external server.

The generative AI module 300 first interprets whether the input command is 1) related to the control of the home appliance, and 2) when the input command is related to the control of the home appliance, the generative AI module 300 may use sample texts or guides provided by the server 500 to generate intent control commands and slot control commands. Alternatively, the generative AI module 300 may generate a result that instructs the execution of a specific routine stored in the server 500.

The specific routine corresponds to a case in which an input command is a command that instructs a predefined situation, that is, a routinized command, and the server 500 or the home appliance 100 may acquire intent control commands and slot control commands related to the predefined situation from the database.

For example, when the predefined routine is "exercise," even when the user says the word "home training", "running", or "cycle" the generative AI module 300 interprets the word as "exercise," and the server 500 or the home appliance 100 may execute a function of an exercise routine.

In addition, the personalized routine may also be stored. Even when the user sets its own routines in the home appliance 100 and inputs words for the corresponding routines, these routines may be stored on the home appliance 100 or the server 500. In addition, when the user says a specific word to invoke such a personalized routine, the generative AI module 300 may interpret the specific word.

When the command indicates a non-predefined situation, that is, a non-routinized command, the generative AI module 300 may extract the most similar command among the pre-stored routines or generate an intent control command and a slot control command based on the interpretation result of the input command.

FIG. 10 is a view showing a configuration of the home appliance according to one embodiment of the present invention.

The structure of FIG. 10 is similar to that of the server 500. However, the home appliance 100 differs from the server 500 in that it provides a specific function.

The home appliance 100 includes a device control unit 150, a control sample database 110, a situational sample database 120, a control command database 130, and a device communication unit 190. In addition, the home appliance 100 optionally includes the generative AI module 300. That is, the generative AI module 300 may be implemented within the home appliance 100 or in an external device (e.g., the server 500 or an external provider).

A functional module 180 provides unique functions of the home appliance 100. For example, when the home appliance 100 is an air conditioner, the functional module 180 includes both indoor and outdoor units. When the home appliance 100 is an oven, the functional module 180 includes a component for heating. When the home appliance 100 is a refrigerator, the functional module 180 includes a component that provides freezing and refrigeration functions.

Depending on the implementation method of the home appliance 100, the functional module 180 may be configured separately, and the device control unit 150 and other components 110, 120, 130, 190, and optionally 300 may be configured using one or more software or hardware units. According to one embodiment of the present invention, the device control unit 150 and other components 110, 120, 130, 190, and optionally 300 may be implemented as a single chip.

The device control unit 150 determines, for the input command, which category it belongs to or which control command it corresponds to and generates a corresponding control command. During the determination process, the device control unit 150 may input predetermined information into the generative AI module 300.

The databases 110 and 120 may store multiple sample texts. In addition, among the databases, the situational sample database 120 may store predefined routines.

The device communication unit 190 communicates with other devices (e.g., other servers or portable terminals). When the generative AI module 300 is disposed in an external device (external server), the device communication unit 190 also communicates with the external device.

The device control unit 150 determines whether the command input to the home appliance 100 corresponds to direct control.

When the determination result indicates that the input command does not correspond to the direct control, the device control unit 150 extracts sample texts having similarity greater than or equal to a predetermined reference value with the input command from the database 120 and inputs the sample texts to the generative AI module 300.

When the input command corresponds to the direct control, the device control unit 150 may generate a control command corresponding to the input command without inputting the input command to the generative AI module 300.

When the input command corresponds to post-interpretational control in the result generated by the generative AI module 300, the device control unit 150 generates a control command using the generated result. This refers to the category description of FIG. 4.

In addition, the home appliance 100 controls the functional module 180 to provide a function according to the generated control command.

By applying the embodiments of the present invention, speech recognition errors can be improved, enabling flexible recognition of user's commands. In addition, through situation-specific customized control, multiple functions of the home appliance may be controlled and operated with a single utterance command. In addition, when the user inputs not only defined keywords or control sentences, but also undefined keywords or non-control sentences, the server 500 may recognize the keywords and the sentences and control the home appliance. In addition, routines pre-stored in the server (e.g., ThinQ routines) may be executed as voice/text command utterances.

In addition, the separate generative AI module (300) (e.g., ChatGPT API) may be used to improve the voice recognition function of the home appliance, enabling recognition of utterances that would not be recognized based on existing defined commands. In addition, when the utterance invokes the ThinQ routine, which is a custom mode of a customer, the routine stored in the server (e.g., a routine stored in the ThinQ Cloud server) may be used to control the home appliance.

Various data that the prompt may include, that is, data included in the prompt may include identification information on the home appliance of the user and configuration information of the home appliance of the user. For example, the identification information on the home appliance is information on a home appliance registered to a server, a home appliance registered to the user's account within the server, and the like as a device the user actually owns in one embodiment.

In order to generate accurate prompts, the prompt may include important information for each home appliance, that is, various information on the configuration of the home appliance.

According to one embodiment of the present invention, there is provided a method of controlling a home appliance based on a command, including a first operation of determining, by a server or a home appliance, whether an input command corresponds to direct control, a second operation of extracting, by the server or the home appliance, sample texts having similarity greater than or equal to a predetermined reference value with the input command from a database and inputting the sample texts to a generative artificial intelligence (AI) module when the input command does not correspond to the direct control in the first operation, a third operation of generating, by the server or the home appliance, a control command using the generated result when the input command corresponds to post-interpretational control in a result generated by the generative AI module, and a fourth operation of providing, by the home appliance, a function according to the generated control command.

According to one embodiment of the present invention, there is provided a server for controlling a home appliance based on a command, including a server control unit configured to determine an input command and generate a corresponding control command, a database which stores a plurality of sample texts, and a server communication unit configured to communicate with a home appliance, wherein the server communication unit receives a command inputted to the home appliance from the home appliance, the server control unit determines whether the command inputted to the home appliance corresponds to direct control, and when the input command does not correspond to the direct control, the server control unit extracts a sample text having similarity greater than or equal to a predetermined reference value from the database and inputs the sample text to a generative artificial intelligence (AI) module, when the input command corresponds to post-interpretational control in the result generated by the generative AI module, the server control unit generates a control command using the generated result, and the server communication unit transmits the control command to the home appliance so that the home appliance provides a function according to the generated control command.

Even though all components constituting the embodiments of the present invention have been described as being coupled or coupled and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments constituting the computer program can be easily inferred by those skilled in the art. Such a computer program may be stored in a computer-readable storage medium and read and executed by a computer, thereby implementing the embodiments of the present invention. The storage media for computer programs include magnetic recording media, optical recording media, and storage media including semiconductor recording devices. In addition, a computer program implementing the embodiments of the present invention includes program modules transmitted in real time through an external device.

The above description focuses on the embodiments of the present invention, but various changes and modifications may be made within the scope of those skilled in the art. Accordingly, it will be understood that these changes and modifications are included within the scope of the present invention as long as they do not depart from the scope of the present invention.

## Claims

1. A method of controlling a home appliance (100) based on a command, the method comprising:
a first operation of determining, by a electronic device (100, 500), whether an input command corresponds to direct control;
a second operation of inputting, by the electronic device (100, 500), guide including category for the command together with the command, and a sample text having similarity greater than or equal to a predetermined reference value with the input command extracted from a database to a generative artificial intelligence (AI) module (300) when the input command in the first operation does not correspond to the direct control in the first operation; and
a third operation in which a result generated by the generative artificial intelligence (AI) (300) module includes the category of the input command and which generates a control command using the generated result.

2. The method of claim 1, wherein the electronic device (100, 500), is home appliance (100), and further comprising a fourth operation of providing, by the home appliance (100), a function according to the generated control command.

3. The method of claim 1 or 2, further comprising providing, by the home appliance (100), a function according to the control command corresponding to the input command when the input command corresponds to the direct control in the first operation.

4. The method of any one of the preceding claims, wherein the sample text has similarity greater than or equal to the reference value with the input command based on BM25 or cosine similarity.

5. The method of any one of the preceding claims, further comprising generating, by the electronic device, a control command using the generated result when the input command corresponds to post-interpretational control in the result generated by the generative AI module in the third operation.

6. The method of any one of the preceding claims, further comprising generating, by the electronic device, a control command corresponding to a routine included in the generated result when the input command corresponds to post-interpretational control in the result generated by the generative AI module in the third operation.

7. The method of any one of the preceding claims, further comprising generating, by the electronic device, a control command to output the generated result via voice or text when the input command corresponds to post-interpretational chat in the result generated by the generative AI module in the third operation.

8. The method of any one of the preceding claims, wherein the third operation further includes generating the control command using an intent control command and a slot control command included in the generated result, and
wherein the second operation includes inputting, by the electronic device, a sample text including one or more intent control commands and one or more slot control commands necessary for controlling the home appliance and the input command to the generative AI module.

9. A server for controlling a home appliance (100) based on a command, the server (500) including:
a server control unit (550) configured to determine an input command and generate a corresponding control command;
a database (510, 520, 530) which stores a plurality of sample texts; and
a server communication unit (590) configured to communicate with a home appliance (100),
wherein after the server communication unit (590) receives a command inputted to the home appliance (100) from the home appliance (100),
the server control unit (590) inputs a guide including a category for the command together with the command and a sample text having similarity greater than or equal to a predetermined reference value with the input command extracted from a database to a generative AI module (300) when the command input in the first operation does not correspond to the direct control,
the server control unit (550) generates a control command using the generated result by the generative AI module (300) and the result includes a category of the input command, and
the server communication unit (590) transmits the control command to the home appliance so that the home appliance (100) provides a function according to the generated control command.

10. The server of claim 9, wherein, when the input command corresponds to the direct control, the server control unit does not input the input command to the generative AI module.

11. The server of claim 9 or 10, wherein the server control unit is configured to generate a control command using the generated result when the input command corresponds to post-interpretational control in the result generated by the generative AI module in the third operation.

12. The server of claim 9, 10 or 11, wherein, when the input command corresponds to post-interpretational control in the result generated by the generative AI module, the server control unit generates a control command corresponding to a routine included in the generated result or, when the input command corresponds to post-interpretational chat in the result generated by the generative AI module in the third operation, the server control unit generates a control command to output the generated result via voice or text.

13. The server of claim 9, 10, 11 or 12, wherein the server control unit generates the control command using an intent control command and a slot control command included in the generated result, and
wherein the serve control unit inputs a sample text including one or more intent control commands and one or more slot control commands necessary for controlling the home appliance, the sample texts, and the input command to the generative AI module.

14. A home appliance (100) for performing a function or an operation in response to an input command provided by a user, the home appliance (100) comprising:
a device communication unit (190) configured to receive the input command inputted by the user to the home appliance (100) or to a remote controller communicating with the device communication unit (190);
a database (110, 120, 130) which stores a plurality of sample texts; and
a device control unit (150) configured to receive the input command from the device communication unit (590) and to generate the control command, wherein the device control unit (150) is configured to perform a method according to any one of the preceding claims.

15. A system comprising a home appliance (100) and a server (500) configured to communicate with each other, wherein the server is according to any one of the claims 9-13 or the home appliance (100) is according to claim 14.
